# EUROPÄISCHE PATENTANMELDUNG

(11) **EP 1 731 555 A2**
(43) Veröffentlichungstag der Anmeldung: **13.12.2006**
(21) Anmeldenummer: 06011815.5
(22) Anmeldetag: 08.06.2006
(51) Int. Cl.: C08J 9/00

(54) **Polymercompound und daraus bestehende schäumfähige Formteile sowie Verfahren zur Herstellung solcher Polymercompounds**

(30) Priorität: 08.06.2005 DE 102005027019
(71) Anmelder: Kcd Kunststoffe, Additive und Beratung GmbH, 99427 Weimar (DE)
(72) Erfinder: Danz, Karl-Christian, Dr., 99423 Weimar (DE)
(74) Vertreter: Oehmke, Volker

(57) **Zusammenfassung**

Die Erfindung betrifft ein Polymercompound für schäumfähige Formteile, enthaltend ein Basispolymer, ausgewählt aus der Gruppe Polyethylen, Polyethylen-Copolymere und Mischungen derselben, eine thermochemisch wirkende Treibmittelzubereitung zum Schäumen des Basispolymers unter Ausbildung einer Schaumstruktur und ein Vernetzungsmittel zur Fixierung des Basispolymers in der Schaumstruktur. Um die Zusammensetzung in ihren Eigenschaften günstig zu beeinflussen, wird vorgeschlagen, dass Kombinationen aus ungesättigten Polyesterharzen (UP-Harzen) mit Siloxanen als weitere Komponenten mit einem Gesamtgewichtsanteil von 0,1 bis 15 % hinzugefügt sind.

## Beschreibung

Die Erfindung betrifft ein Polymercompound sowie ein Verfahren zu seiner Herstellung für Temperatur-schäumbare Formteile mit einem Basispolymer aus der Gruppe Polyethylen, Polyethylencopolymere und Mischungen derselben, einer thermochemisch wirkenden Treibmittelzubereitung zum Schäumen des Basispolymeren, einer chemischen Vernetzerzubereitung zur Fixierung der Schaumstruktur des Basispolymeren und Zusatzstoffen zur Beeinflussung der Verarbeitbarkeit des Basispolymeren, der Schaumbildung und der Vernetzungsreaktionen.

Eine Zusammensetzung dieser Art ist aus der EP-0 383 498 B1 zur Herstellung eines schäumbaren Formteils bekannt. Das Basispolymer dient als Gerüstsubstanz für das Formteil, während das Additivpaket die Vernetzung und Schäumung bewirkt. Solche Formteile werden vor allem zur Schwingungsdämpfung und Hohlraumabschottung in Kraftfahrzeugkarosserien eingesetzt. Zur sicheren Positionierung des Formteils in der Karosserie kann es mit Trägerbauteilen aus Blech oder Polyamid vor dem Einbau fest verbunden werden, mit Polyamid als Trägerbauteil z.B. im Zwei-Komponenten-Spritzgussverfahren. Nach dem Einbau in die Karosserie wird in einem vorgegebenen Prozesstemperaturbereich durch Schäumung in situ der umgebende Karosseriehohlraum abgedichtet. Es wird eine schwingungs- und schalldämpfende Funktion erfüllt und zugleich eine Feuchtigkeitsbarriere zwischen den voneinander abgeschotteten Hohlräumen geschaffen.

In diesem Zusammenhang ist zu beachten, dass die Prozessbedingungen beim Aufschäumen des Formteils nicht frei wählbar, sondern durch Einbrennvorgänge bei der Karosseriebeschichtung vorgegeben sind. Das Verarbeitungsfenster muss also entsprechend weit sein. Beispielsweise soll das Temperatur-/Zeitfenster beim Einbrennen möglichst gering gehalten werden (etwa 160°C und 15 Minuten). Andererseits sollten Temperaturen bis 200°C über 60 Minuten überstanden werden, so dass eventuelle Prozessstörungen bei der Kataphoresebeschichtung nicht zu fehlerhaften Schaumteilen führen. Mit dem bekannten Schaumsystem ist jedoch ein derart breiter Einsatzbereich nicht zu realisieren. Einerseits treten bei hohen Objekttemperaturen Probleme mit den peroxidischen Vernetzern auf, weil die abgespaltenen Radikale zu einer Materialdegradation am Basispolymeren führen. Andererseits sind bei einer geringeren Aktivierung des Gesamtsystems durch niedrigere Temperaturen und kürzere Verweilzeiten weder eine ausreichende Schäumung noch eine gute Haftung an der Karosseriebeschichtung und auch an den Trägerbauteilen gewährleistet. Weitere Nachteile des bekannten Compounds liegen in der Einschränkung bei der Wahl des Basispolymeren auf relativ teure Komponenten und in der Fixierung auf niedrige Schmelzindex-Werte, die dort als erforderlich angesehen werden, um eine hinreichende Ausbildung der Schaumstruktur sicherzustellen und zu verhindern, dass das Formteil bereits vor dem eigentlichen Prozessbeginn abschmilzt. Als nachteilig hat sich ferner herausgestellt, dass das Additivpaket aus Treibmittel, Vernetzer und Aktivatoren in einem Abhängigkeitsverhältnis dahingehend steht, dass die Eigenschaftsmerkmale des Compounds infolge der einzelnen Komponenten nicht isoliert variierbar sind.

Ausgehend hiervon liegt der Erfindung die Aufgabe zugrunde, ein Polymercompound bzw. eine Zusammensetzung dafür anzugeben, womit die vorgenannten Nachteile vermieden und verbesserte Produkteigenschaften, insbesondere in Hinblick auf den Einsatz in einer Hohlraumstruktur in Kombination mit einem konstruktiven Trägerbauteil, erzielt werden.

Erfindungsgemäß wird die Aufgabe mit einem Polymercompound für schäumfähige Formteile mit einem Basispolymer ausgewählt aus der Gruppe Polyethylen, Polyethylen-Copolymere und Mischungen derselben, einer thermochemisch reagierenden Treibmittelzubereitung zum Schäumen des Basispolymers unter Ausbildung einer Schaumstruktur, einem Vernetzungsmittel zur Fixierung des Basispolymers in der Schaumstruktur und gegebenenfalls Zusatzstoffe zur Beeinflussung der Schaumbildung und der Vernetzungsreaktionen, dadurch gelöst, dass Kombinationen aus ungesättigten Polyesterharzen und Siloxanen als weitere Komponenten mit einem Gesamtgewichtsanteil von 0,1 bis 15 % enthalten sind, wobei die Vernetzungstemperatur der ungesättigten Polyesterharze und Siloxane mit dem gewählten Vernetzersystem unterhalb der Vernetzungstemperatur des Basispolymers gewählt wurde. Vorteilhafte Ausgestaltungen und Weiterbildungen der Erfindung ergeben sich aus den abhängigen Ansprüchen.

Der Erfindung liegt der Gedanke zugrunde, eine in ihrem Vernetzungsverhalten weitgehend unabhängig von dem Basismaterial und dessen Additivsystem steuerbare zusätzliche Komponentenkombination vorzusehen, um die Eigenschaftswerte und das Prozessfenster günstig beeinflussen zu können. Dementsprechend wird erfindungsgemäß vorgeschlagen, dass in der Zusammensetzung ungesättigte Polyesterharze und Siloxane in Kombination als weitere Komponenten mit einem Gesamtgewichtsanteil von 0,1 % bis 15 % enthalten sind. UP-Harze und Silikonöle sind ebenso wie die Basispolymere peroxidisch vernetzbar. Polyester- und Siloxanmoleküle werden durch die Vernetzungsreaktionen in das Schaumgerüst der Basispolymere eingebunden. Aufgrund der sterischen Ausdehnung der Polyestermoleküle und der vernetzten Siloxanmoleküle wird die chemische und mechanische Stabilisierung der Schaumstruktur zu einem früheren Zeitpunkt des Schäumvorganges erreicht. Weiter ist die Vernetzung der Zusatzkomponenten weitgehend unabhängig von der Aktivierung der Treibmittel- und Vernetzerkomponenten des Basispolymeren. Damit kann der Schäumvorgang bereits bei tieferen Temperaturen aktiviert werden, ohne dass Basispolymere mit hohem Schmelzindex frühzeitig zerfließen. Bei höheren Temperaturen sind Polyester und Siloxane aufgrund ihrer höheren Reaktivität in der Lage, überschüssige Peroxidreste bzw. freie Radikale abzufangen, wodurch das Grundmaterial stabilisiert und eine erhöhte Temperaturbeständigkeit über relativ lange Zeiträume erreicht wird. Schaumhärte und -flexibilität können durch eine breitere Auswahlmöglichkeit an Basispolymeren, insbesondere auch kostengünstigeren Basispolymeren, in einem größeren Bereich variiert werden. Dieser Vorteil wird weiter dadurch unterstützt, dass durch die unvernetzten Silikonöl- und durch die dünnflüssigen, mittelmolekularen Polyesterharzkomponenten die Verarbeitbarkeit der Gesamtmischung zum Compound und die Verarbeitung des Compounds zu Formteilen durch innere und äußere Gleitwirkungen in Basispolymeren entscheidend erleichtert wird.

Vorteilhafterweise betragen die Anteile der UP-Harze und Siloxane in Summe 1 % bis 12 Gew. %. Der Anteil der Silikonöle mit einer Viskosität von 10 bis 100 000 mm²/s beträgt vorteilhafterweise 0,2 % bis 5 Gew. %, der Anteil der UP-Harze vorteilhafterweise 1 % bis 8 Gew. %. Die UP-Harze auf Basis von ungesättigten Dicarbonsäuren und Polyalkoholen können unter Normalbedingungen flüssige und feste Formen aufweisen. Flüssige UP-Harzkombinationen sind bevorzugt aus Isophthalsäure, Maleinsäure und Polyethylenglykol gebildet. Um höhere UP-Harzanteile realisieren zu können, ist es von Vorteil, wenn die UP-Harze als feste Kombination aus Isophthalsäure, Maleinsäure, Fumarsäure und Neopentylglykol gebildet sind.

Grundsätzlich ist zu gewährleisten, dass die Vernetzungstemperatur der UP-Harze unterhalb der Vernetzungstemperatur des Basispolymeren liegt. Damit lassen sich durch inhibierende Zusätze die Reaktionsabläufe in vorteilhafter Weise an die Vernetzungsreaktionen der Basispolymeren anpassen. Hierzu können Vernetzungsinhibitoren, insbesondere phenolische Antioxydantien wie Bis-[3,3-bis(4'-hydroxy-3'tert.butylphenyl)-butan-säur]-glycolester, Octadecyl-3-(3,5-di-tert.butyl-4-hydroxyphenyl)-propionat, 2,6-Di-tert.butyl-4-methylphenol sowie Chinolinderivate und/oder Chinole, als Zusatzstoffe vorgesehen sein, wobei ein Gesamtgewichtsanteil von 0,0001 % bis 1 % günstig ist. Zur Steuerung des Vernetzungsverlaufs können auch Vernetzungspromotoren, insbesondere Triallylcyanurat (TAC), Triallylisocyanurat (TAIC), Trimethylolpropantrimethacrylat (TRIM), Ethylendiglycoltrimethacrylat oder Monostyrol als Zusatzstoffe mit einem Gewichtsanteil von 0,1 % bis 4 % eingesetzt werden.

Neben der vorstehend genannten Auswahl für die UP-Harze, Silikonöle, Vernetzungspromotoren und Vernetzungsinhibitoren werden im Einzelnen folgende Komponenten vorgeschlagen:
Basispolymere aus der Gruppe Polyethylen und Polyethylen-Copolymere, insbesondere Polyethylen niedriger Dichte, Ethylen-Vinylacetat-Copolymere, Ethylen-Methylacrylat-Copolymere, Ethylen-Butylacrylat-Copolymere, Ethylen-Octen-Copolymere mit einem Gesamtgewichtsanteil von bis zu 97 %.

Treibmittelzubereitungen auf Basis von Azodicarbonsäurediamid zwischen 1 % und 10 Gew. %.

Treibmittelaktivatoren, insbesondere Zinkoxyd, Zinkcarbonat, Paratoluol.sulfohydrazid, Di-phenoxi-di-sulfohydrazid, Zink-di-benzol-sulfinat, Natriumhydrogencarbonat, Harnstoff, Calcium- und/oder Zinkstearat als Zusatzstoffe zur Regelung des Zerfallsbeginns der Treibmittelzubereitung bei Temperaturen oberhalb von 140°C.

Vernetzungsmittel auf Basis organischer Peroxide, beispielsweise 1,1-Di-tert.-butyl-peroxy-3,3,5tri-methyl-cyclohexan oder Bis-tert.-butyl-peroxy-isopropyl-benzol, mit einem Gesamtgewichtsanteil von 0,1 % bis 5 %.

Optional Farbpigmente und/oder Füllstoffe, beispielsweise Kreide, Talkum, Siliciumdioxid, Bariumsulfat, Aluminiumsilikat, Tri-calcium-phosphat mit einem Gesamtgewicht von 1 % bis 30 %.

Ein weiterer Aspekt der Erfindung besteht in der Angabe eines vorteilhaften schäumfähigen Formteils, wofür eine Zusammensetzung gemäß den vorstehend beschriebenen Polymercompounds vorgeschlagen wird. Solche Formteile können besonders vorteilhaft mit Trägerbauteilen aus Blech oder Polyamid kombiniert und zur schall- und wärmedämmenden Abschottung, Schwingungsdämpfung und/oder strukturellen Verstärkung eines Karosseriehohlraums oder Karosseriesegments eines Kraftfahrzeugs eingesetzt werden.

Weitere Vorteile der erfindungsgemäßen Polymercompounds ergeben sich aus der folgenden Beschreibung der Ausführungsbeispiele.

Als Basispolymere werden folgende Abmischungen bevorzugt:
Abmischung 1:
   10 - 90 Gew. % LD-PE mit Schmelzindex (MFI) von 1 g/10 min bis 70 g/10 min
   90 - 10 Gew. % Ethylen-Vinylacetat-Copolymer (EVA) mit Vinylacetat (VA)-Gehalt von 5 bis 30 % und MFI von 1 g/10 min bis 150 g/10 min
Abmischung 2:
   10 - 90 Gew. % LD-PE mit Schmelzindex (MFI) von 1 g/10 min bis 70 g/10 min
   90 - 10 Gew. % Ethylen-Methylacrylat-Copolymer (EMA) mit Methylacrylat (MA)-Gehalt von 5 bis 35 % und MFI von 1 g/10 min bis 40 g/10 min
Abmischung 3:
   10 - 90 Gew. % LD-PE mit Schmelzindex (MFI) von 1 g/10 min bis 70 g/10 min
   90 - 10 Gew. % Ethylen-Butylacrylat-Copolymer (EBA) mit Butylacrylat (BA)-Gehalt von 8 bis 40 % und MFI von 1 g/10 min bis 70 g/10 min
Abmischung 4:
   10 - 90 Gew. % EVA mit VA-Gehalt von 5 bis 30 % und MFI von 1 g/10 min bis 150 g/10 min
   90 - 10 Gew. % EBA mit BA-Gehalt von 8 bis 40 % und MFI von 1 g/10 min bis 70 g/10 min
Abmischung 5:
   10 - 90 Gew. % EVA mit VA-Gehalt von 5 bis 30 % und MFI von 1 g/10 min bis 150 g/10 min
   90 - 10 Gew. % EMA mit MA-Gehalt von 8 bis 40 % und MFI von 1 g/10 min bis 40 g/10 min
Abmischung 6:
   EVA mit VA-Gehalt von 5 bis 30 % und MFI von 1 g/10 min bis 150 g/10 min
Abmischung 7:
   EMA mit MA-Gehalt von 8 bis 40 % und MFI von 1 g/10 min bis 40 g/10 min
Abmischung 8:
   EBA mit BA-Gehalt von 8 bis 40 % und MFI von 1 g/10 min bis 70 g/10 min
Abmischung 9:
   10 - 90 Gew. % EVA mit VA-Gehalt von 5 bis 30 % und MFI von 1 g/10 min bis 150 g/10 min
   90 - 10 Gew. % Ethylen-Okten mit einem Comonomergehalt von 8 bis 50 % und MFI von 0,5 g/10 min bis 30 g/10 min

Als UP-Harze werden flüssige, lösungsmittelfreie Harze aus Isophthalsäure, Maleinsäure und Polyethylenglykol oder feste Harze aus Isophthalsäure, Maleinsäure, Fumarsäure und Neopentylglykol vorgeschlagen.

Als Silikonkomponente Polydimethylsiloxan mit einer Viskosität von 1000 mm²/s bis 100 000 mm²/s oder Molekulargewicht von 15 000 bis 75 000.

Für die Herstellung UP/Siloxan-modifizierter Schaumformteile besteht eine bevorzugte Zusammensetzung aus folgenden Komponenten:
- 82,9 % Basispolymer, umfassend eine der vorgenannten Abmischungen 1 bis 8;
- 5 % UP-Harz flüssig oder fest (s.o.);
- 2 % Polydimethylsiloxan (s. o.);
- 1 % peroxidischer Vernetzer
- 2 % Trimethylolpropantrimethacrylat als Vernetzungspromotor;
- 0,1 % 2,6-Di-tert.butyl-4-methylphenol als Vernetzungsinhibitor;
- 7 % thermochemische Treibmittelzubereitung auf Basis von Azodicarbonsäurediamid.

Weitere bevorzugte Zusammensetzungen ergeben sich aus der folgenden Tabelle:

| Komponenten | Beispiel 1 Gew. % | Beispiel 2 Gew. % | Beispiel 3 Gew. % | Beispiel 4 Gew. % | Beispiel 5 Gew. % |
|---|---|---|---|---|---|
| LD-PE (MFI 20; 0,913 g/cm3) | 35 | 38 | 0 | 0 | 50 |
| EVA (18 % VA; MFI 2 g/10 min) | 0 | 20 | 40 | 85 | 0 |
| EMA (20 % MA; MFI 8 g/10 min) | 45 | 20 | 43 | 0 | 38 |
| UP-Harz (flüssig) | 0 | 0 | 2 | 0 | 0 |
| UP-Harz (fest) | 5 | 6 | 0 | 5 | 2,6 |
| Dimethylpolysiloxan 30 000 mm²/s | 2,2 | 2 | 1,5 | 1 | 0,8 |
| Vernetzer^{*)} | 2,8 | 2,2 | 2,5 | 1,8 | 1,8 |
| Azodicarbonamid-Zubereitung | 7 | 7 | 6,1 | 6,1 | 3,8 |
| Inhibitoren | 0,2 | 0,1 | 0,4 | 0,2 | 0,004 |
| Füllstoffe SiO₂ und Alumosilikat | 2,8 | 4,7 | 4,5 | 0,9 | 2,996 |
| | 100 | 100 | 100 | 100 | 100 |

| | | | | | |
|---|---|---|---|---|---|
| ^{*)} peroxidischer Vernetzer und Vernetzungspromotor im Verhältnis 1/3 | | | | | |

Die Komponenten werden mittels üblicher Compoundierverfahren unter Komponentenmischung und mehrstufiger Extrusion über die Schmelzephase bei Temperaturen unter 120°C homogenisiert und zu Granulaten verarbeitet. Die für die Erzeugung der reaktiven Compounds wesentliche Einhaltung des ungewöhnlich niedrigen Temperaturbereiches wird wesentlich durch die Einbeziehung der leichtfließenden und die Wärmedissipation verhindernden besonderen Komponenten UP-Harz und Silikonöl ermöglicht.
Die fertigen Compounds werden dann im Spritzguss- oder Extrusionsverfahren bei Temperaturen zwischen 80°C und 120°C, also deutlich unterhalb der Reaktionstemperaturen der Wirkstoffkomponenten, zu Formteilen weiterverarbeitet. Die Aufschäumbedingungen für die Formteile können nicht frei gewählt und optimiert werden, sondern werden durch Prozesse bei der Karosserieherstellung vorgegeben und müssen diesen genügen. Dies sind insbesondere die Einbrennprozesse für die Korrosionsschutzgrundierungen und für die nachfolgende Karosserielackierung. Das Aufschäumen der Formteile, und das damit verbundene Abschotten von Karosseriehohlräumen, muss bei relativ geringem Energieeintrag durch Umluft von z. B. 160°C während 15 min Einwirkungsdauer ebenso sicher erfolgen wie bei relativ hohem Energieeintrag von Umluft von z.B. 200°C während 60 min Einwirkungsdauer, für den Fall, dass die Karosserie unvorhergesehen lange im Heizkanal verbleibt.

Die Verwendung bzw. Beimischung der einbezogenen Komponenten UP-Harz und Silikonöl sind nicht nur entscheidend dafür, dass die Polymercompounds bei ungewöhnlich niedrigen Temperaturen hergestellt werden können, vielmehr kann dadurch das Prozessfenster zum Aufschäumen der Formteile in der Karosserie sowohl im Bereich mit niedrigem als auch mit hohem Energieeintrag entscheidend erweitert und den jeweiligen Anforderungen in weit größerem Maße als bekannt angepasst werden.

Aus den beschriebenen reaktiven Compounds hergestellte Teile (mit den Zusammensetzungen gemäß den Beispielen 1 bis 5 der vorstehenden Tabelle) wurden folgenden Funktionsprüfungen unterzogen:

| Prüfung | Beispiel 1 | Beispiel 2 | Beispiel 3 | Beispiel 4 | Beispiel 5 |
|---|---|---|---|---|---|
| Start Aufschäumung (°C) | >130 | >130 | >130 | >130 | >130 |
| Max. Schäumgrad (%) | 1 600 | 1 500 | 900 | 800 | 700 |
| Prozessfenster (°C) | 160-180 | 160-190 | 150-180 | 160-180 | 165-200 |
| Reaktionsgeschw. (min) | < 10 | < 10 | < 5 | < 10 | < 15 |
| Zellstruktur | geschl. | geschl. | geschl. | geschl. | geschl. |
| Wasseraufnahme in 24 H (Vol. %) | < 1 | < 1 | < 1 | < 1 | < 1 |
| Haftung auf geöltem Blech nach Schäumung | sehr gut | sehr gut | sehr gut | sehr gut | sehr gut |
| Haftung auf Kataphoresebesch. nach Schäumung | sehr gut | sehr gut | sehr gut | sehr gut | sehr gut |
| Rest-Schaumgrad nach 1 h bei 180°C (%) | 1 050 | 900 | 400 | 600 | 600 |
| Rest-Schaumgrad nach 1 h bei 200 °C (%) | 0 | 0 | 0 | 200 | 500 |

Zusammenfassend ist Folgendes festzuhalten: Die Erfindung betrifft Polymercompound für schäumfähige Formteile, enthaltend ein Basispolymer, ausgewählt aus der Gruppe Polyethylen, Polyethylen-Copolymere und Mischungen derselben, eine thermochemische Treibmittelzubereitung zum Schäumen des Basispolymers unter Ausbildung einer Schaumstruktur und ein Vernetzungsmittel zur Fixierung der Schaumstruktur des Basispolymers. Um die Zusammensetzung in ihrer Herstellbarkeit und ihren Eigenschaften günstig zu beeinflussen, wird vorgeschlagen, dass Kombinationen aus ungesättigten Polyesterharzen (UP-Harzen) und Siloxanen als weitere reaktive Komponenten mit einem Gesamtgewichtsanteil von 0,1 % bis 15 % hinzugefügt sind.

## Patentansprüche

1. Polymercompound für schäumfähige Formteile mit folgenden Komponenten:
- einem Basispolymer ausgewählt aus der Gruppe Polyethylen, Polyethylen-Copolymere und Mischungen derselben,
- einer thermochemisch reagierenden Treibmittelzubereitung zum Schäumen des Basispolymers unter Ausbildung einer Schaumstruktur,
- einem Vernetzungsmittel zur Fixierung des Basispolymers in der Schaumstruktur
- und gegebenenfalls Zusatzstoffe zur Beeinflussung der Schaumbildung und der Vernetzungsreaktionen,
**dadurch gekennzeichnet, dass**
- Kombinationen aus ungesättigten Polyesterharzen und Siloxanen als weitere Komponenten mit einem Gesamtgewichtsanteil von 0,1 bis 15 % enthalten sind, wobei die Vernetzungstemperatur der ungesättigten Polyesterharze und Siloxane mit dem gewählten Vernetzersystem unterhalb der Vernetzungstemperatur des Basispolymers gewählt wurde.

2. Polymercompound nach Anspruch 1, **dadurch gekennzeichnet,**
**dass** der Anteil der UP-Harze 1 bis 10 Gew. % und der Anteil der Siloxane 0,1 bis 5 Gew. % beträgt.

3. Polymercompound nach Anspruch 1 oder 2, **dadurch gekennzeichnet,**
**dass** UP-Harze auf Basis ungesättigter Dicarbonsäuren und Polyalkoholen in flüssiger und/oder fester Form enthalten sind.

4. Polymercompound nach einem der Ansprüche 1 oder 2, **dadurch gekennzeichnet,**
**dass** die UP-Harze als flüssige Kombination aus Isophthalsäure, Maleinsäure und Polyethylenglykol gebildet sind.

5. Polymercompound nach einem der Ansprüche 1 oder 2, **dadurch gekennzeichnet,**
**dass** die UP-Harze als feste Kombination aus Isophthalsäure, Maleinsäure, Fumarsäure und Neopentylglykol gebildet sind.

6. Polymercompound nach einem der Ansprüche 1 bis 5, **dadurch gekennzeichnet, dass** als Siloxan Dimethylpolysiloxan mit einer Viskosität von 10 bis 100 000 mm²/s verwendet wird.

7. Polymercompound nach einem der Ansprüche 1 bis 6, **dadurch gekennzeichnet, dass** Basispolymere aus der Gruppe Polyethylen und Polyethylen-Copolymere, insbesondere Polyethylen niedriger Dichte, Ethylen-Methylacrylat-Copolymer, Ethylen-Vinylacetat-Copolymer, Ethylen-Butylacrylat-Copolymer, Ethylen-Okten-Copolymer, mit einem Gesamtgewichtsanteil von maximal 95 Gew. % enthalten sind.

8. Polyercompound nach einem der Ansprüche 1 bis 7, **dadurch gekennzeichnet, dass** eine Treibmittelzubereitung auf Basis von Azodicarbonsäurediamid zwischen 1 und 10 Gew. % enthalten ist.

9. Polymercompound nach einem der Ansprüche 1 bis 8, **dadurch gekennzeichnet, dass** Vernetzungsmittel auf Basis organischer Peroxide, beispielsweise 1,1-Di-tert.-butyl-peroxy-3,3,5tri-methyl-cyclo-hexan oder Bis-tert.-butyl-peroxy-isopropylbenzol, mit einem Gesamtgewichtsanteil von 0,1 bis 5 % enthalten sind.

10. Polymercompound nach einem der Ansprüche 1 bis 9, **dadurch gekennzeichnet, dass** Treibmittelaktivatoren, insbesondere Zinkoxid, Zinkcarbonat, Para-toluolsulfo-hydrazid, Di-phenoxi-di-sulfo-hydrazid, Zink-di-benzol-sulfinat, Natriumhydrogencarbonat, Harnstoff oder Zinkstearat als Zusatzstoffe zur Festlegung des Zerfallsbeginns des Treibmittels bei Temperaturen oberhalb von 140°C enthalten sind.

11. Polymercompound nach einem der Ansprüche 1 bis 10, **dadurch gekennzeichnet, dass** Vernetzungsinhibitoren, insbesondere phenolische Antioxydantien wie bis-[3,3-bis (4'-hydroxy-3'-tert.butyl-phenyl)-butansäure]-glycolester, Octadecyl-3-(3,5-di-tert.butyl-4-hydroxy-phenyl)-propionat, 2,6-Di-tert.butyl-4-methyl-phenol sowie Chinolinderivate und/oder Chinole als Zusatzstoffe zur Beeinflussung der Vernetzungstemperaturen der UP-Harz-/Siloxan-Komponenten mit einem Gesamtgewichtsanteil von 0,0001 bis 1 % enthalten sind.

12. Polymercompound nach einem der Ansprüche 1 bis 11, **dadurch gekennzeichnet, dass** Vernetzungspromotoren, insbesondere Tri-allyl-cyanurat, Tri-allyl- isocyanurat, Tri-methylol-propan-tri-methacrylat, Ethylen-di-glycol-tri-methacrylat oder Monostyrol als Zusatzstoffe zur Steuerung des Vernetzungsverlaufes mit einem Gesamtgewichtsanteil von 0,1 bis 3 % enthalten sind.

13. Polymercompound nach einem der Ansprüche 1 bis 12, **dadurch gekennzeichnet, dass** Farbpigmente und/oder Füllstoffe, beispielsweise Kreide, Talkum, Siliciumdioxid, Bariumsulfat, Tri-calcium-phosphat, Alumosilikat, mit einem Gesamtgewichtsanteil von 1 bis 30 % enthalten sind.

14. Schäumfähige Formteile hergestellt mittels Profilextrusion, Spritzguss oder 2-Komponenten-Spritzguss entweder ausschließlich aus einem Polymercompound nach einem der vorangegangenen Ansprüche oder in Verbindung mit einem konstruktiv wirkenden Polyamid- und/oder Blechteil.

15. Verwendung schäumfähiger Formteile nach Anspruch 14 zur schall- und wärmedämmenden Abschottung, Schwingungsdämpfung und/oder strukturellen Verstärkung eines Karosseriehohlraums oder Karosseriesegments eines Kraftfahrzeugs.

16. Verfahren zur Herstellung eines Polymercompounds für schäumfähige Formteile mit folgenden Komponenten:
- einem Basispolymer ausgewählt aus der Gruppe Polyethylen, Polyethylen-Copolymere und Mischungen derselben,
- einer thermochemisch reagierenden Treibmittelzubereitung zum Schäumen des Basispolymers unter Ausbildung einer Schaumstruktur,
- einem Vernetzungsmittel zur Fixierung des Basispolymers in der Schaumstruktur
- und gegebenenfalls Zusatzstoffe zur Beeinflussung der Schaumbildung und der Vernetzungsreaktionen,
**dadurch gekennzeichnet,**
**dass** unter weiterer Beimischung von Kombinationen aus ungesättigten Polyesterharzen und Siloxanen als weitere Komponenten mit einem Gesamtgewichtsanteil von 0,1 bis 15 % sämtliche Komponenten mittels Compoundierverfahren unter Komponentenmischung und mehrfacher Extrusion über die Schmelzphase bei Temperaturen unter 120°C homogenisiert und zu Granalien verarbeitet werden.
